# EUROPÄISCHE PATENTSCHRIFT

(11) **EP 1 556 456 B1**
(45) Veröffentlichungstag und Bekanntmachung des Hinweises auf die Patenterteilung: **22.08.2007**
(21) Anmeldenummer: 03767505.5
(22) Anmeldetag: 07.10.2003
(51) Int. Cl.: C09J 5/04, C09J 5/06

(54) **VERFAHREN ZUR HERSTELLUNG VERLEIMTER HÖLZER IM KURZTAKTVERFAHREN**
METHOD FOR PRODUCING GLUED WOOD IN SHORT PHASES
PROCEDE DE PRODUCTION DE BOIS COLLE A COURTES ETAPES

(30) Priorität: 07.10.2002 DE 10246775
(43) Veröffentlichungstag der Anmeldung: 27.07.2005
(73) Patentinhaber: BASF Aktiengesellschaft, 67056 Ludwigshafen (DE)
(72) Erfinder: PFÜTZE, Eberhard, 55299 Nackenheim (DE); NEUNER, Sepp, 85408 Gammelsdorf (DE)
(74) Vertreter: Isenbruck, Günter
(86) Internationale Anmeldenummer: PCT/EP2003/011078
(87) Internationale Veröffentlichungsnummer: WO 2004/033577

(56) Entgegenhaltungen:
- DE-A- 3 834 026
- DE-A- 10 027 312
- FI-B- 103 490
- US-A- 5 133 822
- DATABASE WPI Section PQ, Week 199750 Derwent Publications Ltd., London, GB; Class P63, AN 1997-544813 XP002276382 & JP 09 262810 A (ANDO M) 7. Oktober 1997 (1997-10-07)

## Beschreibung

Die Erfindung bezieht sich auf ein Verfahren zur Herstellung verleimter Holzteile und Holzbauteile, so zum Beispiel Holzbauteile kleinerer Dimensionen (Standardquerschnitte).

Das Auftragen des Leims ist von grundlegender Bedeutung für ein gutes Ergebnis beim Verleimen. Der Leim wird regelweise auf eine der beiden miteinander zu verbindenden Flächen aufgetragen. Der Auftrag des Leimes erfolgt durch Ausbildung von Gießschnüren. Dabei werden der Leim und ein Härter vor dem Auftragen miteinander gemischt. Dieses Verfahren hat den Nachteil, daß entsprechend der notwendigen Arbeitszeit bis zum Pressen die Harzmischung mit dem Härter auf eine relativ langsame Härtezeit eingestellt werden muß, da der Reaktionsvorgang bereits vor dem Auftragen auf die Holzfläche durch das Mischen eingeleitet wird. Dadurch werden andererseits relativ lange Preßzeiten und damit lange Gesamtbearbeitungszeiten erforderlich, so daß die Betriebsmittel relativ gering ausgelastet sind. Außerdem muß nach einer bestimmten Arbeitszeit das gesamte Gerät, welches mit dem fertigen Leim-Härtegemisch kontaminiert ist, gründlich gereinigt werden, um ein Aushärten von Leimresten in der Auftragsanlage zu unterbinden.

DE 24 16 032 C3 offenbart ein Verfahren zum Verleimen von Holzteilen. Ein flüssiges Harz und ein flüssiger Härter werden jeweils getrennt mittels eines Streifenverteilers aufgetragen. Nachteilig an diesem Verfahren ist der Umstand, daß es neben einer Ausbildung von Fehlstellen auch zu stellenweise ungenügender Vermischung von Härter und Harz kommen kann, wobei benetzte Stellen entstehen können, die nicht oder nur ungenügend aushärten. Somit ist die Verleimung im Bereich dieser Fehlstellen bzw. im Bereich von Verleimungen, an denen Härter und das flüssige Harz ungenügend vermischt sind, geschwächt.

DE 38 34 026 A1 bezieht sich auf ein Verfahren zum getrennten Auftragen eines flüssigen Zweikomponenten-Leimsystems auf die Oberfläche von Holzteilen. Gemäß dieser Lösung wird eine der beiden Komponenten des Zweikomponenten-Leimsystems als Gießfilm und die andere Komponente des Zweikomponenten-Leimsystems als Gießschnur aufgetragen. Mindestens eine der beiden Komponenten des Zweikomponenten-Leimsystems wird in einem Kreislauf umlaufend gehalten. Dazu kann eine der Komponenten über einen Vorratsbehälter, einen mit einem Leitorgan versehenen Gießkopf, unter dem eine Vorschubeinrichtung für die Holzteile angeordnet sein kann, und über eine Auffangwanne im Kreislauf in laufender Umwälzung gehalten werden.

DE 38 34 027 A1 bezieht sich auf ein Verfahren zum Auftragen eines gebrauchsfertigen Leimes auf die Oberfläche von Holzteilen. Dazu wird ein gebrauchsfertiger Leim innerhalb eines Umwälzkreises, welcher einen mit einem Leitorgan versehenen Gießkopf oberhalb einer Vorschubeinrichtung sowie eine Auffangwanne umfaßt, in laufender Umwälzung gehalten, so daß der gebrauchsfertige Leim als Gießfilm auf die Oberfläche der Holzteile aufgetragen werden kann. Der Leim wird dazu vor dem Auftragen auf eine Temperatur von 5°C bis 30°C temperiert. Als gebrauchsfertiger Leim wird auf die Oberfläche der Holzteile, zum Beispiel Harnstoff-Formaldehyd-, Melamin-Harnstoff-Formaldehyd-, Melamin-Harnstoff-Phenol- Formaldehyd-, Phenol-Resorcin-Formaldehyd-, Resorcin-Formaldehyd-, Phenol-Formaldehyd-, Polyvinylacetat-Leime sowie deren Mischungen und weitere in der Holzverarbeitung übliche Leime aufgetragen. Aus DE 38 34 027 A1 geht bereits hervor, den Leim vor dem Auftragen auf die Oberfläche der Holzteile auf eine Temperatur zwischen 5°C bis 30°C zu temperieren. Gemäß dieses Verfahrens läßt sich lediglich eine kurzweilige Erwärmung der Oberfläche der zu verleimenden Holzbauteile erzielen. Ein Auftragen eines Leimes mit einer Temperatur zwischen 5°C und 30°C gestattet keine Beeinflussung der Aushärtezeit der aufgetragenen Leime.

Aus DE 41 26 712 A1 ist eine Dämmplatte aus Holzwerkstoff sowie ein Verfahren zu deren Herstellung bekannt. Gemäß des Verfahrens zur insbesondere kontinuierlichen Herstellung von Dämmplatten aus einem Holzwerkstoff, wird der Holzwerkstoff mit einem warmhärtbaren Bindemittel benetzt und in einer Plattenform während einer Zeitdauer des Ausreagierens des Bindemittels unter Einwirkung von Temperatur bzw. oder Druck eingebracht, oder auf ein Heizzonen durchlaufendes Transportband aufgebracht. Der Holzwerkstoff wird unter Zuführung von Energie vorgetrocknet und nach Benetzung mit dem Bindemittel in die Plattenform eingebracht oder zu einem insbesondere endlosen Strang auf dem Transportband geformt. Danach wird dieser mit zumindest einer Presse, insbesondere einer Durchlaufpresse unter Einwirkung einer Druck- und/oder einer Wärmeenergie fügestabilisiert und die Platte bzw. der Strang über Mikrowellen erhitzt. Die Mikrowellenenergie wird in Form von Mikrowellen einer Wellenlänge zwischen 1 mm bis 1000 mm und einer Frequenz von etwa 2500 MHz zugeführt.

FI-B-103490 bezieht sich auf ein Verfahren zum Zusammenleimen von Holzstücken, bei dem Leim auf wenigstens eine der gegeneinander kommenden Flächen der zusammen zu leimenden Holzstücke aufgebracht wird und wenigstens ein Holzstück vor der Aufbringung des Leimes erwärmt wird, so dass darin Wärme aufgespeichert wird. Die Holzstücke mit den erwähnten Flächen werden gegeneinander angeordnet und zusammengepresst, bis der Leim zwischen den Flächen erhärtet ist.

Angesichts der aus dem Stand der Technik bekannten Lösungen liegt der Erfindung die Aufgabe zugrunde, die Verkürzung von Preßzeiten von Holz- und Holzbauteilen zu erreichen und damit eine Kapazitätssteigerung von Anlagen zur Herstellung verleimter konstruktiver Holzteile bzw. Holzbauteile zu erreichen.

Erfindungsgemäß wird diese Aufgabe dadurch gelöst, daß die zu beleimenden Holzquerschnitte vor der Beleimung eine gleichmäßige Durchwärmung des gesamten Querschnittes der Holzteile oder Holzbauteile in einem elektromagnetischen Strahlungsfeld erfahren und die Beleimung der erwärmten Holzteile/Holzbauteile durch getrennten Auftrag von Leimharz und Härter (Binder) oder eines aus Leimharz und Härter gemischten Leimsystems erfolgen. Erfindungsgemäß erfolgt vor der Beleimung der Holzteile oder Holzbauteile eine gleichmäßige Durchwärmung des gesamten Querschnitts der Holzteile oder Holzbauteile durch Mikrowellenbestrahlung.

Durch die vollständige Durchwärmung des gesamten Querschnittes des Holzbauteiles bzw. des Holzteiles vor der Beleimung wird erreicht, daß die dem Holzteil oder Holzbauteil nach dem Prozeß innewohnende spezifische Wärmekapazität C_{P} als Wärmespeicher ausgenutzt wird, was eine erhebliche Reduzierung der Aushärtezeit des aufgetragenen Leimes bzw. der aufgetragenen Leimkomponenten und damit eine erhebliche Reduzierung der erforderlichen Mindestpreßzeiten der Holzbauteile bzw. der Holzteile bewirkt. Mittels des erfindungsgemäßen Verfahrens wird die Reaktivität des aufgetragenen Leimes bzw. des aufgetragenen Leimsystems erheblich erhöht, wodurch die Aushärtungszeit drastisch reduziert werden kann. Durch die erfindungsgemäß vorgeschlagenen Maßnahmen wird eine spannungsfreie Leimfuge erhalten; ferner ist eine Verringerung der Leimauftragsmenge von etwa 400 g/m² auf 300 g/m² bei gleichmäßiger Vorwärmung des Gesamtquerschnittes aufgrund der höheren Reaktivität des aufgetragenen Leimes bzw. Leimsystems erzielbar.

Die Erhöhung der Temperatur des gesamten Querschnittes des Holzteiles oder des Holzbauteiles setzt ferner die Viskosität des Leimes bzw. des eingesetzten Leimsystems herab, so dass sich eine gleichmäßigere Verteilung des Leimes bzw. des Leimsystems einstellt. Damit einher geht eine vorteilhafte Beeinflussung der Adhäsion sowie eine bessere Fugenqualität der erhaltenen Leimfugen. Aufgrund des geringeren über die Leimfugen hervorquellenden und an der Außenseite des Holzbauteiles bzw. Holzteils verbleibenden Leimrestes wird in nachfolgenden Verarbeitungsschritten die Abnutzung von Werkzeugen wie beispielsweise Hobeln, drastisch herabgesetzt. Die Hobelmesserabnutzung fällt deutlich geringer aus, da die Hobelmesser bei Einsatz des erfindungsgemäß vorgeschlagenen Verfahrens nunmehr aufgrund des geringeren Leimüberschusses im Fugenbereich das Bauteil bearbeiten und nicht durch vorspringende angetrocknete Leimreste vorzeitig abnutzen. Ferner kann aufgrund des eingeschränkten Leimüberquellens im Fugenbereich eine geringere Verschmutzung der Anlagenteile erreicht werden.

Durch das vorgeschlagene Verfahren lässt sich insgesamt das Lagerungsverhalten der hergestellten Holzteile bzw. Holzbauteile günstig beeinflussen.

Die Erwärmung der zu beleimenden Holzteil- oder Holzbauteilquerschnitte vor dem Leimauftrag erfolgt erfindungsgemäß durch Mikrowellen bestrahlung. Dies erlaubt kurze Preßzeiten in Anlagen zur Herstellung verleimter plattenförmiger oder konstruktiver Holzteile. Dazu durchlaufen die für die Beleimung vorbereiteten Holzteile bzw. Holzbauteile eine Erwärmungsstation. Die Zufuhr der miteinander zu verleimenden Holzteile bzw. Holzbauteile zur Erwärmungsstation einer Anlage zur Herstellung plattenförmiger oder konstruktiver Holzteile, wie zum Beispiel Brettschichtholz, Konstruktionsvollholz, Duo- bzw. Triolam, kann sowohl auf kontinuierlichem Wege als auch auf getaktetem Wege erfolgen. Gute Ergebnisse werden insbesondere bei einer Temperierung des gesamten Querschnittes des Holzbauteils oder des Holzteils auf Temperaturen zwischen 30°C und 95°C erhalten. Bevorzugt erfolgt eine Temperierung des gesamten Querschnittes der Holzbauteile bzw. der Holzteile auf Temperaturen zwischen 40°C und 70°C. Besonders bevorzugt wird der gesamte Querschnitt des Holzbauteils bzw. des Holzteils auf eine Temperatur zwischen 45°C und 60°C erwärmt.

Nach dem Erwärmen der zur Beleimung vorbereiteten Holzquerschnitte werden für die Holzverleimung übliche Leimtypen eingesetzt, so zum Beispiel für Brettschichtholz (BSH), vorzugsweise Kondensationsleim oder Kondensationsharzleime auf der Basis von Harnstoff, Melamin, Phenol/Resorcin und Formaldehyd, so zum Beispiel Harnstoff-Formaldehyd-, Melamin-Harnstoff-Formaldehyd-, Melamin-Harnstoff-Phenol-Formaldehyd-, Phenol-Resorcin-Formaldehyd-, Resorcin-Formaldehyd-, Phenol-Formaldehydleime oder Phenol-Formaldehydharzleime sowie Polyvinylacetat-Leime, EPI-Leime, deren Mischungen und weitere in der Holzverarbeitung übliche Leime, wie zum Beispiel ein- oder mehrkomponentige Polyadditionsprodukte, mit denen sowohl tragende als auch nicht tragende Holzbauteile bzw. Holzteile miteinander verleimt werden.

Durch die Gesamtkombination aller Maßnahmen gemäß des vorgeschlagenen Verfahrens können die Presszeiten der miteinander zu verleimenden Holz- bzw. Holzbauteile erheblich reduziert werden. Bei Nadelhölzern wie zum Beispiel Fichte, Tanne, Lärche und Kiefer können die Preßzeiten von üblicherweise 8 bis 12 Stunden bei 20°C auf ca. eine Stunde verkürzt werden. Bei im allgemeinen schwer zu verleimenden Laubhölzern wie Buche, Eiche, Esche, Birke, Ahorn und auch tropischen Holzarten, läßt sich neben einer erheblichen Preßzeitverkürzung zusätzlich eine verbesserte Verleimungsqualität erreichen. Mit dem vorgeschlagenen Kurztaktverfahren wird durch den Verfahrensschritt der Erwärmung des gesamten Querschnittes des Holzbauteils bzw. der Holzteile vor der Beleimung die Preßzeit drastisch verkürzt.

Der sich an die Erwärmung des gesamten Querschnittes der Holzbauteile bzw. der Holzteile innerhalb einer Erwärmungsstation anschließende Bearbeitungsschritt des Leimauftrages auf die miteinander zu verleimenden Holzflächen kann mit Auftragsverfahren erfolgen, bei denen insbesondere bei konstruktiven Holzbauteilen Kondensationsharzsysteme, ein Leimharz und dazugehörigen Härter umfassend, eingesetzt werden. Der Leimauftrag kann sowohl in untergemischter Leimflotte als auch mit getrennt voneinander aufzutragenden Einzelkomponenten eines Leimsystems erfolgen. Als Auftragtechnik kann sowohl der Schnurauftrag als auch der Filmauftrag gewählt werden. Bei getrenntem Auftrag der Leimkomponenten können beliebige Kombinationen von Schnurauftrag und Filmauftrag gewählt werden. Aufgrund der erhöhten Substrattemperatur durch eine gleichmäßige Vorwärmung der miteinander zu verleimenden Holzteile bzw. Holzbauteile läßt sich die Viskosität der aufzutragenden Leime bzw. Leimkomponenten herabsetzen, was eine bessere Adhäsion zur Folge hat. Die Erwärmung des gesamten Querschnittes auf eine Temperatur zwischen 30°C und 95°C, bevorzugt auf eine Temperatur zwischen 40°C und 70°C und besonders bevorzugt auf eine Temperatur, die zwischen 45°C und 60°C liegt, erlaubt eine Reduzierung der aufzutragenden Leimmenge, da durch die Erwärmung des gesamten Holzquerschnittes eine bessere Verteilung des Leimes bzw. der bei Leimsystemen eingesetzten Komponenten auf den beleimten Oberflächen erreicht werden kann.

Mit dem erfindungsgemäß vorgeschlagenen Verfahren läßt sich die Kapazität von Anlagen zur Herstellung verleimter plattenförmiger, ein- oder mehrschichtiger Massivholzplatten oder konstruktiver Holzbauteile, wie Brettschichtholz (BSH), Konstruktionsvollholz oder Duo- bzw. Triolam-Holzteile, Bohlen, Kanthölzer erhöhen. Weiterhin können Spanplatten, Faserplatten (HDF/MDF), OSB-Platten, Sperrholz untereinander verleimt werden. Bei Sandwich-Elementen, wie zum Beispiel mit isolierenden Polystyrolschichten versehene Bauelemente oder mit PU-Schäumen beschichtete Bauelemente, läßt sich eine erhebliche Beschleunigung der Verleimung erreichen. Das erfindungsgemäß vorgeschlagene Verfahren ist besonders für den Einsatz bei der Herstellung konstruktiver Holzbauteile kleinerer Dimensionen, d.h. zur Herstellung von Standardquerschnittten geeignet.

Anhand einer Zeichnung wird das erfindungsgemäß vorgeschlagene Verfahren nachfolgend genauer beschrieben.

Es zeigt:
- Figur 1: eine Draufsicht einer Anlage zur Verarbeitung von Holzbauteilen und Holzteilen,
- Figur 2: die schematische Wiedergabe einer Preßstation.

Nach der Vorbereitung der zu beleimenden Flächen der Holzteile bzw. Holzbauteile 10, d.h. nach deren Oberflächenbehandlung zur Herstellung einer glatten Oberfläche und nach einem eventuellen Reinigen der Oberfläche, werden die Holzteile bzw. Holzbauteile 10 einer Erwärmungsstation 3 zugeführt. Der Erwärmungsstation 3 werden die zu beleimenden Holzteile/Holzbauteile 10 entweder mit kontinuierlichem Vorschub oder auch mit getaktetem Vorschub zugeführt.

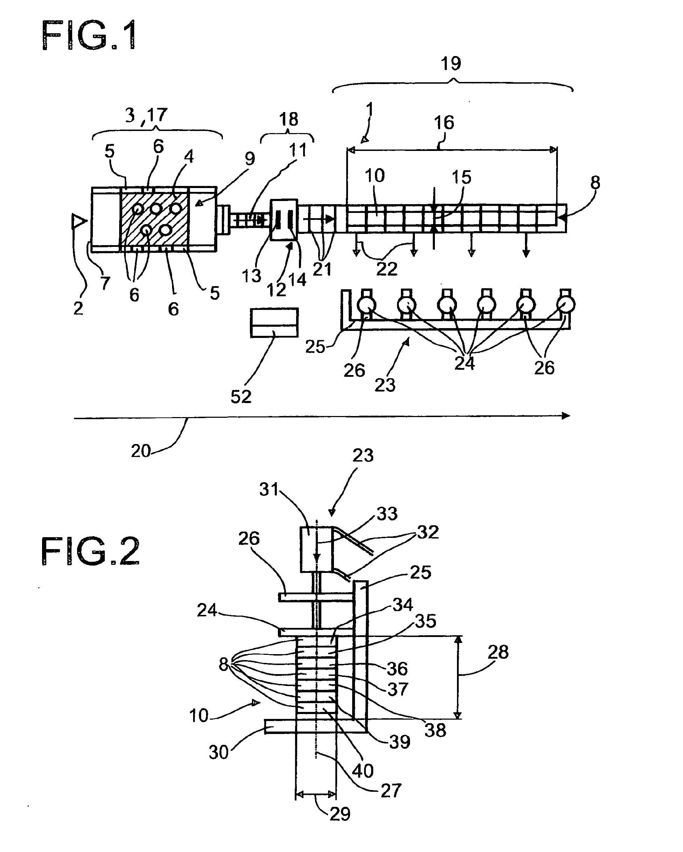

Die für die Beleimung vorbereiteten Holzteile/Holzbauteile 10 werden vor dem Leimauftrag einer Erwärmungsstation 3 zugeführt. In der Erwärmungsstation 3 wird eine Mikrowellenstrahlung erzeugt, mit welcher ein gleichmäßiges Durchwärmen des gesamten Querschnittes 8 der einzelnen Holzteile/Holzbauteile 10, die der Erwärmungsstation 3 kontinuierlich oder getaktet zugeführt werden, erreicht werden kann. In der Erwärmungsstation 3 ist ein Erwärmungsraum von einer Oberseite 4 und einer Unterseite sowie Seitenwänden 5 begrenzt. Sowohl an der Oberseite 4 als auch an der Unterseite und an den Seitenwänden 5 des Erwärmungsraumes können Strahleranordnungen 6 , angeordnet werden, mit denen eine gleichmäßige Beaufschlagung des zu erwärmenden Materials innerhalb der Erwärmungsstation 3 mit kurzwelliger Strahlung oder Mikrowellenstrahlung von diesen Seiten gewährleistet ist. Die Strahleranordnungen 6 umfassen Einzelstrahler, die durchaus unterschiedliche Strahlungsleistungen abgeben können. Die dem Erwärmungsraum zugeführten Holzbauteile bzw. Holzteile 10 werden in Durchlaufrichtung 2 zugeführt. Wie aus der Darstellung gemäß Figur 1 hervorgeht, wird der gesamte Querschnitt der Holzteile/Holzbauteile 10 durch die Strahleranordnungen 6, die an den Seitenwänden 5 des Erwärmungsraums aufgenommen sind, aufgewärmt. Da eine gleichmäßige Bestrahlung aller Seiten der Holzteile/Holzbauteile 10 innerhalb der Erwärmungsstation 3 gewährleistet ist, stellt sich im Inneren des gesamten Querschnittes 8 eines jeden, die Erwärmungsstation 3 passierenden Holzteiles/Holzbauteiles 10 eine gleichmäßige Erwärmung ein. Je nach Aufenthaltsdauer und Intensität der Bestrahlung mit Mikrowellen, stellt sich innerhalb der gesamten Querschnitte 8 der Holzteile/Holzbauteile 10 eine Temperatur zwischen 30°C und 95°C ein. Bei einer Erwärmung des gesamten Querschnittes 8 der Holzteile/Holzbauteile 10 auf eine Temperatur zwischen 40°C und 70°C läßt sich eine Verkürzung der Preßzeit nach einer Verleimung der über ihren Querschnitt 8 gleichmäßig erwärmten Holzbauteile bzw. Holzteile 10 in einer der Erwärmungsstation 3 nachgeschalteten Beleimungsstation 12 erreichen. Besonders bevorzugt erfolgt eine Erwärmung des gesamten Querschnittes 8 der Holzbauteile bzw. Holzteile 10 auf eine Temperatur zwischen 45°C und 60°C.

Bei der Passage der Erwärmungsstation 3 wird das den Holzteilen/Holzbauteilen 10 innewohnende Wärmespeicherungspotential, gegeben durch die spezifische Wärmekapazität Cp zur Speicherung von Wärme ausgenutzt, die eine erhebliche Reduzierung der Aushärtezeit der aufgetragenen Leime bzw. Leimsysteme und damit eine erhebliche Reduzierung der erforderlichen Mindestpreßzeit erlaubt. Die Beleimung der über ihren gesamten Querschnitt erwärmten Holzteile bzw. Holzbauteile 10 erfolgt durch getrennten Auftrag von Leimharz und Härter bzw. Binder eines Leimsystems. Der Auftrag der Komponenten des Leimsystemes kann sowohl im Schnurauftragsverfahren oder mittels des Filmgießverfahrens erfolgen; ferner ist auch eine beliebige Kombination von Verfahrensschritten der beiden Auftragsverfahren miteinander denkbar. Ebenso kann eine aus Leimharz und Härter hergestellte Mischung gleichfalls nach dem Schnur- oder Filmgießverfahren aufgetragen werden. Es läßt sich eine Verkürzung der Preßzeiten und damit eine Kapazitätssteigerung von Anlagen zur Herstellung verleimter plattenförmiger, zum Beispiel ein- oder mehrschichtiger Massivholzplatten oder konstruktiver, wie zum Beispiel Brettschichtholz, Konstruktionsvollholz und/oder Duo- bzw. Triolam-Holzteile erreichen. Mit dem erfindungsgemäß vorgeschlagenen Verfahren einer Durchwärmung der gesamten Querschnitte 8 von zu verleimenden Holzteilen/Holzbauteilen 10 im Kurztaktverfahren lassen sich grundsätzlich alle üblichen Holzarten verarbeiten. Bei Nadelhölzern, wie zum Beispiel Fichte, Tanne, Lärche und Kiefer können die Preßzeiten in einer Erwärmungsstation 3 mit nachgeschalteter Leimauftragsstation, nachgeschalteter Preßstation von üblicherweise 8 bis 12 Stunden bei 20°C auf ca. 1 Stunde drastisch verkürzt werden. Bei den im Allgemeinen schwerer zu verleimenden Laubhölzern, wie zum Beispiel Buche, Eiche, Esche, Birke, Ahorn und exotischer, tropischer Hölzer, läßt sich neben einer Preßzeitverkürzung auch eine verbesserte Verleimungsqualität erzielen, da aufgrund der durch die Erwärmung des gesamten Querschnittes 8 der Holzteile/Holzbauteile 10 die Viskosität des aufgetragenen Leimes bzw. einer Komponente eines Mehrkomponenten-Leimsystems herabgesetzt werden kann, so daß eine bessere Leimverteilung in der Fuge und demzufolge eine bessere Adhäsion bei gleichzeitiger Optimierung der aufgetragenen Leimmenge erreichen läßt. Ein weiterer Vorteil der Gesamtkombination aller Maßnahmen des erfindungsgemäß vorgeschlagenen Verfahrens ist darin zu erblicken, dass sich eine spannungsfreie Leimfuge erreichen lässt und die Auftragsmenge der miteinander zu verleimenden Komponenten eines Leimsystems herabgesetzt werden kann. Es stellt sich eine bessere Fugenqualität im Bereich der Verleimungsfuge ein, was die Standzeit von Werkzeugen, mit denen die durch das erfindungsgemäß vorgeschlagenen Verfahren hergestellten Holzteile bzw. Holzbauteile nachfolgend bearbeitet werden, sehr günstig beeinflusst. Der Einsatz des erfindungsgemäß vorgeschlagenen Verfahrens verkürzt die Preßzeiten sowohl bei der Verarbeitung von Nadelhölzern als auch bei der Verarbeitung von Laubhölzern.

Das erfindungsgemäß vorgeschlagene Kurztaktverfahren eignet sich insbesondere zur Herstellung von Vollholzquerschnitten, seien es Bretter, Bohlen oder Kanthölzer, wie zum Beispiel Brettschichtholz, Duolam oder Triolam, konstruktives Vollholz (KVH), Einschichtplatten sowie mehrschichtigen Massivholzplatten. Diese Werkstoffe, d.h. Bretter, Bohlen, Kanthölzer, Brettschichtholz, Duolam, Triolam, konstruktives Vollholz (KVH), Einschichtplatten und mehrschichtige Massivholzplatten könnten mittels des erfindungsgemäß vorgeschlagenen Verfahrens auch untereinander verleimt werden.

Ferner kann das Kurztaktverfahren in die Bearbeitungszeiten positiv beeinflussender Weise zur Herstellung von Sandwich-Elementen eingesetzt werden, wobei die Sandwich-Elemente Isolierungen aus Polystyrol oder PU-Schäumen oder aus die Isolationseigenschaften der Sandwich-Elemente positiv beeinflussenden Schichten aufweisen können.

An der Austrittsseite der in Figur 1 dargestellten Erwärmungsstation 3 verlassen die gleichmäßig erwärmten Holzteile/Holzbauteile 10 den Erwärmungsraum.

Der Austrittsseite des Erwärmungsraums der Erwärmungsstation 3 ist eine Fördereinrichtung zugeordnet, über welche die aus der Austrittsseite der Erwärmungsstation 3 austretenden, gleichmäßig durchgewärmten Holzteile bzw. Holzbauteile 10 zu einer Beleimungsstation 12 transportiert werden. In der Beleimungsstation 12 erfolgt die Beleimung der Holzteile/Holzbauteile 10. Bei konstruktiven Holzbauteilen bzw. Holzteilen 10 werden vorzugsweise Kondensationsharzsysteme, ein Leimharz und einen Härter umfassend, eingesetzt. Der Leimauftrag auf die zur Beleimung vorbereiteten, im gesamten Querschnitt 8 erwärmten Holzteile/Holzbauteile 10 kann sowohl in untergemischter Leimflotte als auch mit getrennt aufzutragenden Einzelkomponenten erfolgen. Bei der Auftragstechnik wird zwischen Schnurauftrag und Filmauftrag unterschieden. Zur Beleimung von über ihren gesamten Querschnitt 8 gleichmäßig durchwärmten Holzbauteilen bzw. Holzteilen 10 kommen Harnstoff Formaldehyd-Harz (UF), Melamin-Harnstoff Formaldehyd-Harz (MUF), Melamin-Hamstoff-Phenol-Formaldehyd-Harz (MUPF), Phenol-Resorcin-Formaldehyd-Harz (PRF), Resorcin-Formaldehyd-, Phenol-Formaldehyd-Leime sowie Polyvinylacetatleime, EPI-Leime, deren Mischungen und weitere in der Holzverarbeitung übliche Leime, wie z.B. ein- oder mehrkomponentige Polyadditionsprodukte zum Einsatz, die sowohl für die Verleimung von tragenden als auch für die Verleimung von nicht tragenden Holzbauteilen 10 Verwendung finden.

Die in Figur 1 dargestellte Verleimungs- und Preßanlage 1 umfaßt die Erwärmungsstation 3, welche von Holzbauteilen oder Holzteilen 10 in Durchlaufrichtung 2 passiert wird. Die Verleimungs- und Pressanlage 1 lässt sich über ein Bedienpult 52 von einem Bediener steuern.

Die Beleimungsstation 12 umfaßt eine erste Auftragseinrichtung 13 sowie eine zweite Auftragseinrichtung 14, die entweder einzeln betreibbar sind oder die parallel zueinander betrieben werden können. So läßt sich an einer der Auftragseinrichtungen 13 bzw. 14 ein Filmauftrag eines Leimes bzw. einer Leimkomponente erreichen, während über die verbleibende der Auftragseinrichtungen 13 bzw. 14 der Beleimungsstation 12 ein Schnurauftrag eines Leimes bzw. einer Leimkomponente auf einem Holzbauteil/Holzteil 10 erfolgen kann. Nach Passage der Beleimungsstation 12 erfolgt die Förderung der mit einer untergemischten Leimflotte oder mit Leimauftrag beschichteten Holzbauteile/Holzteile 10 über beispielsweise rollenförmig ausgebildete Förderkörper 21 zu einer Preßstation.

Während die Erwärmungsphase während des Bearbeitungsverlaufes 20 der Holzbauteile/Holzteile 10 mit Bezugszeichen 17 gekennzeichnet ist, ist die in der Beleimungsstation 12 erfolgende Auftragsphase des Leimes bzw. der Leimkomponenten bei Leimsystemen mit Bezugszeichen 18 bezeichnet. An die Auftragsphase des Leimes bzw. der Leimkomponenten eines Leimsystems schließt sich die Pressphase 19 innerhalb des Bearbeitungsverlaufes 20 an. Mit Bezugszeichen 16 ist die Länge des Holzbauteiles/Holzteiles 10 bezeichnet, während Bezugszeichen 15 die Breite der Holzbauteile/Holzteile 10 bezeichnet. Während der mit Bezugszeichen 19 identifizierten Pressphase erfolgt eine Reaktion des in der Beleimungsstation 12 aufgetragenen Leimes bzw. der dort aufgetragenen Leimkomponenten eines Leimsystems. Die entsprechend präparierten Holzbauteile/Holzteile 10 werden in Querrichtung 22 einer Preßvorrichtung 23 zugeführt. Dort werden einzelne Holzbautefle/Holzteile 10 der Länge 16 und der Breite 15 aufeinandergeschichtet angeordnet. Nach Erreichen einer Stapelhöhe 28 werden an ein solcherart beschaffenes konstruktives Holzbauteil 10 ein oder mehrere Preßstempel 24 angestellt. Die an einem Preßbett 25 der Preßvorrichtung 23 aufgenommenen Preßstempel 24 können über gemeinsam oder jeweils getrennt angesteuerte Hydraulik- bzw. Pneumatikteile mit einer bestimmten wohldefinierten Anpreßkraft beaufschlagt werden. Die Anpreßkraft, die auf die verleimten Holzbauteile bzw. Holzteile 10 ausgeübt wird, kann sowohl in vertikale Richtung als auch in horizontale Richtung wirkend aufgebracht werden, wobei die Presskraft auch gleichzeitig in beiden Ebenen aufgebracht werden kann. Üblicherweise sind die Preßstempel 24 der Pressvorrichtung 23 in einem Abstand zwischen 30 und 50 cm angeordnet.

Figur 2 zeigt die in Figur 1 in der Draufsicht dargestellte Preßeinheit, in welche die zur Verpressung vorbereiteten Holzbauteile/Holzteile in Schichtfolge eingelegt werden, in einer Vorderansicht.

Aus der Darstellung gemäß Figur 2 geht hervor, daß auf einer Auflage 30, die durch die Unterseite des Preßbettes 25 gebildet wird, ein zum Verpressen vorbereitetes, mit einer Leimschicht versehenes Einzelbauteil auf ein anderes geschichtet wird. In der Darstellung gemäß Figur 2 umfaßt das in die Preßvorrichtung 23 eingelegte, zum Verpressen und Trocknen vorbereitete Holzbauteil/Holzteil 10 ein erstes Einzelbauteil 34, ein zweites Einzelbauteil 35, ein drittes Einzelbauteil 36, ein viertes Einzelbauteil 37, ein fünftes Einzelbauteil 38, ein sechstes Einzelbauteil 39 sowie zuunterst ein siebtes Einzelbauteil 40. Gemäß dieser Schichtfolge werden beispielsweise Brettschichthölzer hergestellt, die als Tragwerkkomponente für den Mehrzweckhallenbau und ähnliche Zwecke eingesetzt werden. Nach Aufschichtung der Einzelbauteile 34 bis 40 in einer maximalen Schichthöhe 28 erfolgt die Beaufschlagung einer den Preßstempel 24 beaufschlagenden Hydraulik- bzw. einer Pneumatikeinheit 31. Anstelle einer in Figur 2 schematisch dargestellten Hydraulik- bzw. Pneumatikeinheit 31, die mit einem Versorgungsleitungssystem 32 für ein Druckmedium verbunden ist, können zur Anstellung der Preßstempel 24 an die Oberseite des verleimten, zu verpressenden Holzbauteiles/Holzteiles 10 auch mechanisch angetriebene Spindelpressen eingesetzt werden. Die Druckkraft 33, die durch die Stempelfläche 26 des Preßstempels 24 in das Holzbauteil/Holzteil 10 eingeleitet wird, wird in der koaxial zur Symmetrieachse 27 des geschichtet aufgebauten Holzbauteiles/Holzteiles 10 eingeleitet. Daneben kann eine in horizontaler Richtung auf die Schichtanordnung des Holzbauteils bzw. des Holzteils 10 wirkende Presskraft aufgebracht werden, um während des in vertikaler Richtung wirkenden Pressvorganges ein Verkippen oder Verrutschen des geschichtet aufgebauten, zu verpressenden Stapels zu vermeiden. Die maximale Breite des zu verpressenden Holzbauteiles/Holzteiles 10 ist in der Darstellung gemäß Figur 2 durch Bezugszeichen 29 gekennzeichnet.

Durch das erfindungsgemäß vorgeschlagene Kurztaktverfahren zur Herstellung konstruktiver bzw. plattenförmiger Holzbauteile/Holzteile 10 läßt sich die Verweilzeit, die zur Aushärtung des Leimes bzw. des Leimsystems innerhalb einer Preßvorrichtung 23 gemäß der schematischen Darstellung in Figur 2 erforderlich ist, erheblich verkürzen und in Einzelfällen sogar mehr als halbieren. Durch das erfindungsgemäß vorgeschlagene Kurztaktverfahren sind durch eine gleichmäßige Erwärmung des gesamten Querschnittes 8 der miteinander zu verleimenden Holzbauteile/Holzteile 10 einerseits kürzere Verarbeitungs- und Presszeiten und andererseits eine Reduzierung der eingesetzten Leimmenge - sei es die eingesetzte Einzelmenge eines Einzelleimes oder seien es die eingesetzten Mengen der Komponenten eines Leimsystems - erreichbar.
Beide Faktoren tragen zu einem erheblichen Produktivitätsgewinn einer Verleimungs- und Preßanlage 1 gemäß der Darstellung in Figur 1 bei.

### Bezugszeichenliste

- 1: Verleimungs- und Preßanlage
- 2: Durchlaufrichtung
- 3: Erwärmungsstation
- 4: Oberseite Erwärmungsstation
- 5: Seitenwand Erwärmungsstation
- 6: Strahleranordnung
- 7: Eintrittsseite
- 8: Querschnitt Holzbauteil/Holzteü 10
- 9: Strahlungsfeld
- 10: Holzbauteil/Holzteil
- 11: Fördereinrichtung
- 12: Verleimungsstation
- 13: erste Auftragseinrichtung
- 14: zweite Auftragseinrichtung
- 15: Breite Holzbauteil/Holzteil 10
- 16: Länge Holzbauteil/Holzteil 10
- 17: Erwärmungsphase
- 18: Auftragsphase
- 19: Trocknungs- und Preßphase
- 20: Bearbeitungsdurchlauf
- 21: Förderkörper
- 22: Ablaufrichtung
- 23: Preßvorrichtung
- 24: Preßstempel
- 25: Preßbett
- 26: Traverse
- 27: Symmetrieachse
- 28: Schichtungshöhe Holzbauteil/Holzteil 10
- 29: Maximalbreite
- 30: Auflage
- 31: Hydraulik/Pneumatik-Einheit
- 32: Versorgungsleitung Druckmedium
- 33: Preßkraftrichtung
- 34: erstes Einzelbauteil
- 35: zweites Einzelbauteil
- 36: drittes Einzelbauteil
- 37: viertes Einzelbauteil
- 38: fünftes Einzelbauteil
- 39: sechstes Einzelbauteil
- 40: siebtes Einzelbauteil
- 52: Bedienpult

## Patentansprüche

1. Verfahren zur Herstellung von verleimten Holzteilen oder Holzbauteilen (10) unter Verwendung von Leimsystemen, wobei die Beleimung der erwärmten Holzteile oder Holzbauteile (10) durch getrennten Auftrag von Leimharz und Härter (Binder) oder eines aus Leimharz und Härter gemischten Leimsystems erfolgt, **dadurch gekennzeichnet, dass** vor der Beleimung der Holzteile oder Holzbauteile (10) eine gleichmäßige Durchwärmung des gesamten Querschnitts (8) der Holzteile oder Holzbauteile (10) durch Mikrowellenbestrahlung erfolgt.

2. Verfahren gemäß Anspruch 1, **dadurch gekennzeichnet, dass** der gesamte Querschnitt (8) der Holzteile oder Holzbauteile (10) auf eine Temperatur zwischen 30°C und 95°C gleichmäßig erwärmt wird.

3. Verfahren gemäß Anspruch 2, **dadurch gekennzeichnet, dass** der gesamte Querschnitt (8) der Holzteile oder Holzbauteile (10) bevorzugt auf eine Temperatur zwischen 40°C und 70°C gleichmäßig erwärmt wird.

4. Verfahren gemäß Anspruch 2, **dadurch gekennzeichnet, dass** der gesamte Querschnitt (8) der Holzteile oder Holzbauteile (10) besonders bevorzugt auf eine Temperatur zwischen 45°C und 60°C gleichmäßig erwärmt wird.

5. Verfahren gemäß Anspruch 1, **dadurch gekennzeichnet, dass** die Beleimung der erwärmten Holzteile/Holzbauteile (10) mit untergemischter Leimflotte erfolgt.

6. Verfahren gemäß Anspruch 1, **dadurch gekennzeichnet, dass** der Leimauftrag der getrennten oder vermischten Komponenten eines Mehrkomponenten-Leimsystems im Schnurauftragsverfahren (42) oder im Filmgießverfahren (43) erfolgt.

7. Verfahren gemäß Anspruch 1, **dadurch gekennzeichnet, dass** ein getrennter Auftrag von Leimharz und Härter mittels des Schnurgießverfahrens (42), des Filmgießverfahrens (43) oder einer beliebigen Kombination des Schnurgießverfahrens (42) mit dem Filmgießverfahren (43) erfolgt.

8. Verfahren gemäß Anspruch 1, **dadurch gekennzeichnet, dass** zur Beleimung der über ihren gesamten Querschnitt (8) gleichmäßig erwärmten Holzteile oder Holzbauteile (10) duroplastische Kondensationsleime wie zum Beispiel Harnstoff Formaldehyd-Harz (UF), Melamin-Harnstoff-Formaldehyd-Harz (MUF), Melamin-Harnstoff Phenol-Formalde-hyd-Harz (MUPF), Phenol-Resorcin-Formaldehyd-Harz (PRF), oder ein- oder mehrkomponentige Additionsleime, oder thermoplastische Leime wie z.B. Polyvinylacetat-Leime (PVA'c) und EPI-Leime sowie Mischungen derselben eingesetzt werden.

9. Verwendung des Verfahrens gemäß einem oder mehrerer der Ansprüche 1 bis 8, **dadurch gekennzeichnet, dass** Vollholzquerschnitte, Bretter, Bohlen, Kanthölzer, Brettschichtholz, Duolam-Platten, Triolam-Platten, konstruktives Vollholz (KVH), ein- oder mehrschichtige Massivholzplatten, Faserplatten (MDF/HDF), Sandwich-BauElemente mit ein- oder beidseitig angeordneten Isolationsschichten aus Polystyrol oder PU-Schäumen hergestellt werden.

10. Verwendung des Verfahrens gemäß einem oder mehrerer der Ansprüche 1 bis 8, **dadurch gekennzeichnet, dass** Vollholzquerschnitte, Bretter, Bohlen, Kanthölzer, Brettschichtholz, Duolam-Platten, Triolam-Platten, konstruktives Vollholz (KVH), ein- oder mehrschichtige Massivholzplatten, Faserplatten (MDF/HDF), Sandwich-Bauelemente mit ein- oder beidseitig angeordneten Isolationsschichten aus Polystyrol oder PU-Schäumen in beliebiger Kombination miteinander verleimt werden.

## Claims

1. A process for the production of glued wood parts or wood components (10) using glue systems, the gluing of the heated wood parts or wood components (10) being effected by a separate application of laminating resin and curing agent (binder) or of a glue system mixed from laminating resin and curing agent, wherein uniform thorough heating of the total cross section (8) of the wood parts or wood components (10) by microwave radiation (9) is effected prior to gluing of the wood parts or wood components (10).

2. The process according to claim 1, wherein the total cross section (8) of the wood parts or wood components (10) is uniformly heated to a temperature of from 30 to 95°C.

3. The process according to claim 2, wherein the total cross section (8) of the wood parts or wood components (10) is preferably uniformly heated to a temperature of from 40 to 70°C.

4. The process according to claim 2, wherein the total cross section (8) of the wood parts or wood components (10) is particularly preferably uniformly heated to a temperature of from 45 to 60°C.

5. The process according to claim 1, wherein the gluing of the heated wood parts/wood components (10) is effected with mixed glue liquor.

6. The process according to claim 1, wherein the application of the separate or mixed components of a multicomponent glue system is effected by the string application method (42) or by the film casting method (43).

7. The process according to claim 1, wherein separate application of the laminating resin and curing agent is effected by means of the string casting method (42), the film casting method (43) or any desired combination of the string casting method (42) with the film casting method (43).

8. The process according to claim 1, wherein thermosetting condensation glues, for example urea/formaldehyde resin (UF), melamine/urea/formaldehyde resin (MUF), melamine/urea/phenol/formaldehyde resin (MUPF), phenol/resorcinol/formaldehyde resin (PRF) or one-component or multicomponent addition glues, or thermoplastic glues, such as polyvinyl acetate glues (PVAc) and EPI glues, and mixtures thereof are used for gluing the wood parts or wood components (10) uniformly heated over their total cross section (8).

9. The use of the process according to one or more of claims 1 to 8, wherein solid wood cross sections, boards, planks, squared timbers, glued laminated wood, duolam boards, triolam boards, solid structural wood, single-layer or multilayer solid wood boards, fiberboards (MDF/HDF), sandwich structural elements having insulating layers of polystyrene or PU foams arranged on one or both sides are produced.

10. The use of the process according to one or more of claims 1 to 8, wherein solid wood cross sections, boards, planks, squared timbers, glued laminated wood, duolam boards, triolam boards, solid structural wood, single-layer or multilayer solid wood boards, fiberboards (NmF/HDF), sandwich structural elements having insulating layers of polystyrene or PU foams arranged on one or both sides are glued to one another in any desired combination.

## Revendications

1. Procédé de production de pièces de bois ou éléments de construction en bois (10) collés par utilisation de systèmes de colle, dans lequel l'encollage des pièces de bois ou éléments de construction en bois (10) chauffés a lieu par application séparée de résine collante et de durcisseur (liant) ou d'un système de colle mélangé de résine collante et de durcisseur, **caractérisé en ce que**, avant l'encollage des pièces de bois ou éléments de construction en bois (10), un échauffement uniforme de la totalité de la section transversale (8) des pièces de bois ou éléments de construction en bois (10) est effectué par irradiation par des micro-ondes.

2. Procédé suivant la revendication 1, **caractérisé en ce que** la totalité de la section transversale (8) des pièces de bois ou éléments de construction en bois (10) est chauffée de manière uniforme à une température comprise entre 30°C et 95°C.

3. Procédé suivant la revendication 2, **caractérisé en ce que** la totalité de la section transversale (8) des pièces de bois ou éléments de construction en bois (10) est chauffée de manière uniforme de préférence à une température comprise entre 40°C et 70°C.

4. Procédé suivant la revendication 2, **caractérisé en ce que** la totalité de la section transversale (8) des pièces de bois ou éléments de construction en bois (10) est chauffée de manière uniforme particulièrement avantageusement à une température comprise entre 45°C et 60°C.

5. Procédé suivant la revendication 1, **caractérisé en ce que** l'encollage des pièces de bois/éléments de construction en bois (10) chauffés a lieu avec un bain de colle mélangé.

6. Procédé suivant la revendication 1, **caractérisé en ce que** l'application des composants séparés ou mélangés d'un système de colle à plusieurs composants a lieu dans un procédé d'application de cordon (42) ou dans un procédé de coulage de film (43).

7. Procédé suivant la revendication 1, **caractérisé en ce qu'**une application séparée de résine collante et de durcisseur a lieu au moyen d'un procédé de coulage de cordon (42), d'un procédé de coulage de film (43) ou d'une combinaison quelconque du procédé de coulage de cordon (42) avec le procédé de coulage de film (43).

8. Procédé suivant la revendication 1, **caractérisé en ce que**, pour l'encollage des pièces de bois ou éléments de construction en bois (10) chauffés de manière uniforme sur la totalité de leur section transversale (8), on met en oeuvre des colles de condensation thermodurcissables, comme par exemple de la résine d'urée-formaldéhyde (UF), de la résine de mélamine-urée-formaldéhyde (MUF), de la résine de mélamine-urée-phénol-formaldéhyde (MUPF), de la résine de phénol-résorcine-formaldéhyde (PRF) ou des colles d'addition à un ou plusieurs composants, ou des colles thermoplastiques, comme par exemple des colles d'acétate de polyvinyle (PVA'c) et des colles EPI, ainsi que leurs mélanges.

9. Utilisation du procédé suivant une ou plusieurs des revendications 1 à 8, **caractérisée en ce qu'**on prépare des sections en bois plein, des planches, des madriers, des bois équarris, du bois collé laminé, des plaques Duolam, des plaques Triolam, du bois plein de construction (KVH), des plaques de bois plein à une ou plusieurs couches, des plaques de fibres (NmF/HDF), des éléments de construction en sandwich avec des couches d'isolation en polystyrène ou en mousses de PU agencées d'un côté ou des deux.

10. Utilisation du procédé suivant une ou plusieurs des revendications 1 à 8, **caractérisée en ce que** des sections en bois plein, des planches, des madriers, des bois équarris, du bois collé laminé, des plaques Duolam, des plaques Triolam, du bois plein de construction (KVH), des plaques de bois plein à une ou plusieurs couches, des plaques de fibres (MDF/HDF), des éléments de construction en sandwich avec des couches d'isolation en polystyrène ou en mousses de PU agencées d'un côté ou des deux sont collés les uns aux autres dans une combinaison quelconque.
